(19) Europäisches Patentamt
European Patent Office
Office européen des brevets

(11) Numéro de publication: **0 190 953**
**B1**

(12) # FASCICULE DE BREVET EUROPÉEN

(45) Date de publication du fascicule du brevet: **12.07.89**

(51) Int. Cl.⁴: **B 32 B 17/10,** B 29 C 67/24, C 03 C 27/12

(21) Numéro de dépôt: **86400068.2**

(22) Date de dépôt: **14.01.86**

(54) **Procédé et dispositif pour la fabrication d'un vitrage de sécurité.**

(30) Priorité: **15.01.85 FR 8500497**

(43) Date de publication de la demande: **13.08.86 Bulletin 86/33**

(45) Mention de la délivrance du brevet: **12.07.89 Bulletin 89/28**

(84) Etats contractants désignés: **BE DE FR GB IT SE**

(56) Documents cité:
**EP-A-0 131 523**
**EP-A-0 144 065**
**BE-A-676 994**
**FR-A-2 059 907**
**FR-A-2 398 606**
**US-A-3 671 370**

**JOURNAL OF APPLIED POLYMER SCIENCE, vol. 29, 1984, pages 1959-1969, John Wiley & Sons Inc., New York, US; J.M. CASTRO et al.: "Effect of processing conditions on premature gelling, knit line strength, and physical properties for the RIM process"**

(73) Titulaire: **SAINT- GOBAIN VITRAGE, Les Miroirs 18, avenue d'Alsace, F-92400 Courbevoie (FR)**

(72) Inventeur: **Moncheaux, Michel- Jean, 9 Rue des Sablons, F-60200 Compiègne (FR)**
Inventeur: **Toytot, François, 15 Rue de Vogué, F-60150 Thourotte (FR)**

(74) Mandataire: **Muller, René, SAINT- GOBAIN RECHERCHE 39, quai Lucien Lefranc, F-93304 Aubervilliers (FR)**

EP 0 190 953 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention est relative à la fabrication d'un vitrage feuilleté de sécurité comprenant au moins une feuille de verre et au moins une couche de matière plastique présentant des propriétés d'absorbeur d'énergie.

Des vitrages feuilletés de sécurité comprenant une feuille de verre et au moins une couche de matière plastique ont déjà été décrits dans de nombreuses publications.

Ainsi la publication du brevet français 2 398 606 décrit un vitrage feuilleté comprenant une feuille de verre, une couche de matière plastique ayant des propriétés d'absorbeur d'énergie formée d'un polyuréthane thermoplastique obtenu à partir d'au moins un diisocyanate aliphatique et d'au moins un polyesterdiol ou polyétherdiol, le rapport des groupements équivalents NCO aux groupements équivalents OH étant de préférence compris entre 0,8 et 0,9, et une couche de matière plastique ayant des propriétés de surface notamment de bonnes résistances à la rayure et à l'abrasion. Ce vitrage utilisé notament comme pare-brise de véhicule à moteur conserve ses bonnes propriétés optiques et l'adhésion reste bonne entre les éléments, dans des conditions de température et d'humidité très variables, mais les propriétés biomécaniques du vitrage et notamment la résistance aux chocs ne sont pas entièrement satisfaisantes.

On connaît encore d'après la publication de brevet européen 0 054 491 un vitrage feuilleté ayant la structure décrite précedemment, utilisant en tant que couche intercalaire de matière plastique ayant des propriétés d'absorbeur d'énergie, une couche à base d'une polyuréthane-ployurée présentant une structure linéaire et une teneur en groupe urée de l'ordre de 1 à 20 % en poids, cette polyuréthanepolyurée étant le produit réactionnel d'un prépolymère issu d'un composant polyol et d'un composant isocyanate pris en excès, avec au moins une diamine. Cette couche intercalaire est fabriquée par extrusion d'une résine polyuréthane-polyurée ou par coulée d'une solution de ladite résine et évaporation des solvants, ce qui dans un cas come dans l'autre nécessite plusieurs opérations successives.

Dans le cas de l'extrusion, il est nécessaire d'effectuer une synthèse préalable de la résine pour pouvoir l'extruder.

En outre pour obtenir la qualité optique nécessaire à l'application envisagée, il faut "repasser" la feuille. Cette qualité optique obtenue ne se maintient d'ailleurs généralement pas dans le temps car la matière plastique garde en mémoire son procédé de fabrication et la qualité obtenue par le "repassage" s'amenuise avec le temps.

De plus, l'extrusion de la couche ayant des propriétés d'absorbeur d'énergie pose un problème d'assemblage avec la couche autocicatrisable.

Dans le cas de la coulée d'une solution, il est également nécessaire d'effectuer une synthèse préalable de la résine. Il faut ensuite dissoudre celle-ci dans un solvant puis couler la solution et évaporer le solvant de façon répétitive pour l'obtention d'une couche d'épaisseur compatible avec le caractère absorbeur d'énergie recherché. L'évaporation du solvant constitue en outre une source de nuisance.

L'invention obvie aux inconvénients cités et propose un procédé de fabrication d'un vitrage de sécurité utilisé notamment en tant que pare-brise de véhicule qui présente de bonnes propriétés optiques et biomécaniques et qui les conserve dans des conditions variables de température et d'humidité.

Le vitrage fabriqué selon le procédé de l'invention comprend de même que les vitrages connus cités ci-dessus, une feuille de verre qui peut être trempée, recuite, une couche de matière plastique ayant des propriétés d'absorbeur d'énergie, le cas échéant une couche de revêtement autocicatrisable résistant à la rayure et à l'abrasion, ou une ou plusieurs autres couches en verre ou en matière plastique.

Le procédé selon l'invention consiste à former directement la couche ayant des propriétés d'absorbeur d'énergie sur la feuille de verre du vitrage par injection réactive sous une pression comprise entre 2 et 10 bars environ entre ladite feuille de verre et un contre-moule rigide, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de ces diisocyanates, ce composant ayant une viscosité inférieure à environ 5 Pas à + 40°C, le composant polyol comprenant au moins un polyol long difonctionnel de masse moléculaire comprise entre 500 et 4000 et au moins un diol court en tant qu'agent d'allongement de chaîne, au moins un des deux composants isocyanate ou polyol permettant la formation de liaisons de réticulation dans la couche. Par injection réactive on entend une introduction sous une pression comprise entre 2 et 10 bars environ dans le moule d'un mélange liquide des composants réactionnels à l'état de monomères ou de prépolymères, suivie d'une polymérisation dans le moule de ce mélange par la chaleur. Cette injection réactive qui fournit à la couche ses bonnes propriétés mécaniques et optiques sera décrite plus complètement dans la suite de la description.

Les proportions des composants du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque tous les composants du polyuréthane sont difonctionnels, la limite inférieure du rapport NCO/OH pour l'obtention de propriétés mécaniques satisfaisantes se si tue à 0,9 environ. Lorsqu'un des composants au moins est trifonctionnel, cette limite inférieure peut être baissée jusqu'à environ 0,8. Lorsque le rapport NCO/OH est supérieur à 1, plus il croît et plus certaines propriétés mécaniques de la couche obtenue par injection réactive sont renforcées, par exemple la couche devient plus rigide, mais étant donné le coût plus

élevé du composant isocyanate par rapport à celui du composant polyol, le choix de ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au diol court représentant cependant généralement de 20 à 70 % des groupements équivalents totaux du mélange formant le composant polyol dans le cas où le rapport des groupements équivalents NCO sur les groupements OH est de l'ordre de 1. Lorsqu'on augmente la proportion du diol court on durcit la couche et on augmente généralement son module.

Les diisoyanates convenables utilisés dans le cadre de l'invention sont choisis notamment parmi les isocyanates difonctionnels aliphatiques suivants: hexméthylènediisocyante (HMDI), 2,2,4-triméthyl-1,6-hexanediisocyanate (TMDI), bis 4-isocyanatocyclo-hexylmétnane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p- TMXDI), trans-cyclohexane-1,4 diisocyanate (CHDI), 1,3 (diisocyanatométhyl)cyclohexane (XDI hydrogéné).

On utilise de préférence de l'IPDI seul ou en mélange notamment pour des raisons de prix de revient.

Sous un des aspects de l'invention, on utilise un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence seul ou en mélange du 3-isocyanatométhyl-3,5,5 triméthylcyclohexylisocyanate comportant des fonctions urées (IPDI et dérivés).

Les polyols longs convenables sont choisis parmi des polyétherdiols ou des polyesterdiols de masse moléculaire 500 - 4000; les polyesterdiols étant les produits d'estérification d'un diacide tel que l'acide adipique, succinique, palmitique, azelaïque, sébacique, ophtalique, et d'un diol tel un éthylèneglycol, propanediol -1,3, butanediol - 1,4, hexanediol- 1,6, les polyétherdiols de formule générale

$$H\text{-}[\text{-}O\,(CH_2)n\text{-}]\text{-}m\ OH$$

avec n = 2 à 6 ; m tel que la masse moléculaire soit située dans l'intervalle 500 - 4000, ou les polyétherdiols de formule générale

$$H\text{-}[\text{-}\overset{\overset{\displaystyle CH_3}{|}}{O CH}\text{-}CH_2\text{-}]\text{-}\ m\ OH$$

avec m tel que la masse moléculaire soit située egalement dans l'intervalle 500 - 4000. On peut encore utiliser des polycaprolactonediols.

On utilise de préférence un polytétramétnylèneglycol (n = 4) de masse moléculaire 1000.

Les agents d'allongement de chaînes convenables sont des diols courts de masse moléculaire inférieure à environ 300 et de préférence inférieure à 150, tels que les: éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl-2 hexanediol-1,3, triméthyl-2,2,4-pentanediol-1,3, diéthylèneglycol, triéthylèneglycol, tétraéthylèneglycol, butyne-2-diol-1,4, butènediol-1,4 et décynediol substitués et/ou éthérifiés, hydroquinone-bishydroxyéthyléther, bisphénol A éthérifiés par deux ou quatre groupes d'oxyde de propylène, acide diméthylolproponique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Une des caractéristiques de la couche ayant des propriétés d'absorbeur d'énergie est qu'elle est obtenue par injection réactive. Cette injection réactive fournit dans le cas de composants de départ difonctionnels une couche qui n'est pas entièrement thermoplastique lorsque le rapport des groupements NCO/OH est sensiblement égal à 1.

L'injection réactive implique une réaction de polymérisation rapide pour que la couche soit formée en des temps compatibles avec une fabrication industrielle. Ceci nécessite une température élevée, de l'ordre de 80 à 150°C environ, température à laquelle des réactions secondaires de ramification se produisent créant par exemple des groupements allophanates et/ou biurets entre les chaînes d'uréthane, telles que:

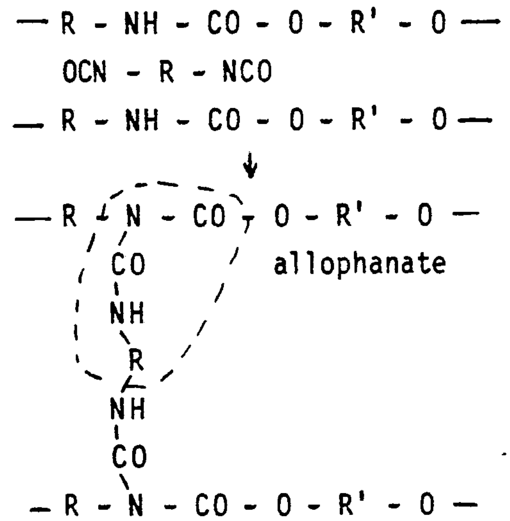


ou

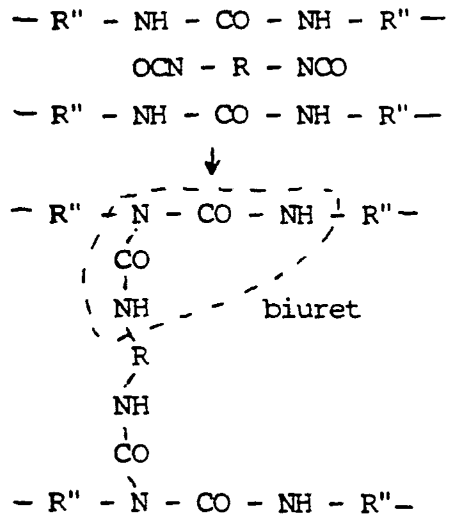


Dans ces conditions opératoires, mêmes avec des composants difonctionnels, lorsque le rapport NCO/OH est sensiblement égal à 1 contre indiqué précédement, le produit obtenu n'est pas complètement thermoplastique, en effet il est infusible et insoluble dans la plupart des solvants des polyuréthanes tel que le tétrahydrofurane, le diméthylformamide. On en tire contre avantage des propriétés mécaniques améliorées à formulation égale par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Le composant polyol peut contenir une proportion d'au moins un polyol de fonctionnalité supérieure à deux et notamment des triols aliphatiques monomères tels le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3. L'ajout d'un polyol de fonctionnalité supérieure à 2, provoque des liaisons de pontage supplémentaires entre les chaînes du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle, le polyol long représente environ de 0,30 à 0,45 équivalent, le diol court d'environ 0,2 à 0,7 équivalent et le polyol de fonctionnalité supérieure à 2 environ 0 à 0,35 équivalent.

Suivant une autre réalisation de la couche AE de l'invention, le composant isocyanate peut contenir dans des proportions limitées, par exemple inférieures à 15 % en équivalent NCO, au moins un triisocyanate tels un biuret d'isocyanate ou un triisocyanurate.

Sous un aspect de l'invention, une partie du composant polyol peut être remplacée par un produit à hydrogènes actifs différents tel une une.

Pour former la couche AE selon l'invention, on injecte sous pression le mélange réactionnel dans un moule

formé par la feuille de verre utilisée en tant que composant du vitrage et un contre-moule rigide qui peut être monolithique ou feuilleté comprenant par example des éléments en verre et/ou en matière plastique et/ou en métal, le contre-moule ou une partie de ses éléments le constituant le cas échéant, pouvant entrer également dans la composition du vitrage à fabriquer.

La pression d'injection du mélange réactionnel peut varier en fonction du mélange réactionnel choisi, de l'épaisseur de la couche à former et des dimensions du vitrage. On utilise généralement une pression de 2 à 10 bars et de préférence de 2 à 3 bars.

Lorsqu'on fabrique selon l'invention un vitrage comprenant uniquement une feuille de verre et la couche AE, on traite la face du contre-moule à l'aide d'un agent de séparation ce qui permet après polymérisation de la couche AE de séparer le contre-moule du vitrage fabriqué. En tant qu'agent de démoulage, on peut utiliser par exemple des solutions de silicone, des cires végétales ou un produit d'addition modifié d'éthylène oxyde comme celui décrit par exemple dans la publication de brevet français 2 383 000.

Selon le procédé de l'invention on peut aussi avantageusement fabriquer un vitrage à trois couches, en particulier un vitrage qui en plus de la feuille de verte et de la couche AE, comprend une couche de revêtement en matière plastique ayant des propriétés de surface améliorées et notamment une bonne résistance à la rayure et à l'abrasion. On peut, selon une caractéristique de l'invention, fabriquer cette couche par injection réactive des composants réactionnels de ladite couche, après formation de la couche AE, comme décrit plus en détail par la suite. Dans une variante avantageuse, on forme la couche de revêtement au préalable, on dispose cette couche sur la face intérieure du contre-moule préalablement enduite d'un agent de démoulage approprié qui peut être un de ceux décrits précédemment et on utilise ensuite ce contremoule revêtu de la couche ayant des propriétés de surface pour la formation par injection réactive de la couche AE, de sorte que la couche AE est injectée directement entre les deux autres composants du vitrage à fabriquer, à savoir la feuille de verre et la couche de recouvrement en matière plastique, et après polymérisation de la couche AE et après démoulage, on obtient directement le vitrage à 3 couches.

La couche de recouvrement autocicatrisable résistante à la rayure en matière plastique que l'on désigne encore dans l'application selon l'invention par couche de protection interne (couche PI) a pour composition par exemple celle décrite dans les publications de brevets français 2 187 719 et 2 251 608. Cette couche autocicatrisable a dans les conditions normales de température, une haute capacité de déformation élastique, un faible module d'élasticité, inférieur à 2000 daN/cm$^2$ et de préférence inférieur à 200 daN/cm$^2$, et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Des exemples de monomères qui conviennent pour la préparation de ces polyuréthanes thermodurcissables notamment par pulvérisation réactive selon l'invention sont d'une part les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis(isocyanatométhyl)benzène, le bis(4-isocyanatocyclohexyl)méthane, le bis(3-méthyl-4-isocyanatocyclohexyl)méthane, le 2,2-bis(4-isocyanatocyclohexyl)propane et le 3-isocyanatométhyl-3,5,5-triméthyl-cyclohexylisocyanate, ainsi que les biurets, isocyanurates et prépolymères de ces composés ayant une fonctionnalité supérieure à 2 et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2-bis(hydroxyméthyl)-1-propanol (triméthyloléthane), le 2,2-bis(hydroxy-méthyl)-1-butanol (triméthylolpropane), le 1,2,4,-butane-triol, le 1,2,6-hexane-triol, le 2,2-bis (hydroxyméthyl)-1,3- propanediol (pentaérythritol) et le 1,2,3,4,5,6-hexane-hexol (sorbitol), avec des diacides aliphatiques contre l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane.

Le poids mouléculaire des polyols ramifiés est avantageusement d'environ à 250 à 4000 et de préférence d'environ 450 à 2000. Des mélances de différents polyisocyanates et polyols monomères peuvent être utilisés. Un polyuréthane thermodurcissable particulièrement préféré est celui décrit dans la publication de brevet français 2 251 608.

Pour former la couche de revêtement au préalable, on opère avantageusement selon l'invention en formant directement cette couche sur le contre-moule qui devient alors support de formation en étant préalablement revêtu d'un agent de démoulage. A cet effet on peut former directement la couche PI par une pulvérisation réactive sur le contre-moule du mélange réactionnel de composants suivi d'une polymérisation de la couche pulverisée.

La pulvérisation peut être réalisée par tout système de pulvérisation procurant une couche homogène en épaisseur mais aussi en composition. Ce peut être une pulvérisation électrostatique ou non.

Avantageusement, la pulvérisation est une pulvérisation centrifuge à grande vitesse que l'on effectue à l'aide d'une tête de pulvérisation tel un bol tournant à une vitesse comprise entre 1000 et 80000 tours/minute. On peut utiliser par exemple le procédé et le bol tournant décrits dans la demande de brevet français 8 406 783.

Pour éviter une polymérisation prématurée, on forme avantageusement le mélange réactionnel du composant polyol et du composant isocyanate directement dans la tête de pulvérisation.

Sous un aspect avantageux de l'invention on effectue la pulvérisation sur le contre-moule que l'on a chauffé au préalable. On obtient ainsi un bon nappage par exemple lorsque la température du support est comprise

entre 25° C et 70° C environ.

Lorsque le vitrage est utilisé en tant que pare-brise de véhicule à moteur, la couche ayant des propriétés d'absorbeur d'énergie (couche AE) obtenue par injection réactive présente généralement une épaisseur supérieure à environ 0,4 mm. Pour d'autres applications, cette épaisseur peut être éventuellement inférieure. L'épaisseur de la couche PI peut varier plus largement, en étant comprise entre 0 à 0,5 mm environ et de préférence entre 0,02 à 0,4 mm environ.

La couche ayant des propriétés d'absorbeur d'énergie et le cas échéant la couche PI peuvent contenir divers additifs qui servent généralement à faciliter leur fabrication ou qui peuvent éventuellement améliorer encore certaines de leur propriétés.

Elles peuvent contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo-(2,2,2)-octane, le 1,8-diazabicyclo (5,4,0)-1 decene-7.

Ces couches peuvent contenir un stabilisant tel le bis (2,2,6,6-tétraméthyl-4 piperidyl)sebaçate, un antioxydant phénolique.

Elles peuvent contenir également un agent nappant tel une résine silicone, un ester fluoroalkylé, une résine acrylique.

On peut encore avantageusement selon l'invention fabriquer un vitrage complexe, en associant au cours de la formation par injection réactive de la couche AE un ensemble feuilleté ou feuille complexe comprenant au moins deux couches de matière plastique que l'on dispose au préalable sur le contre-moule revêtu d'un agent de séparation. Ainsi on peut fabriquer un vitrage comprenant une feuille de verre, une couche AE, une feuille de matière plastique par exemple une feuille de renforcement des propriétés de la couche AE, notamment en téréphtalate de polyéthylène glycol, et une couche PI. A cet effet, on forme la feuille complexe, par exemple par une pulvérisation réactive des composants de la couche PI sur la feuille de matière plastique ou par coulée réactive des composants de la couche PI comme décrit par exemple dans la publication de brevet européen 0 038 760. On place la feuille complexe formée sur le contre-moule revêtu au préalable d'un agent de démoulage, la couche PI étant orientée vers le contre-moule, et on injecte les composants de la couche AE entre la feuille de verre, élément du vitrage, utilisée en tant que moule et la feuille de matière plastique complexe placée sur le contre-moule.

L'injection réactive selon l'invention s'applique également à la fabrication d'une couche intercalaire d'un vitrage feuilleté comprenant deux feuilles de verre. Dans ce cas, on injecte directement le mélange réactionnel entre les deux feuilles de verre du vitrage qui jouent le rôle de moule et de contre-moule.

L'épaisseur de la couche AE obtenue par injection réactive est déterminée par l'espacement entre le moule et le contre-moule.

Dans une mise en oeuvre du procédé, on place à la périphérie du moule ou du contre-moule des cales d'épaisseur égale à l'espacement désiré. Un cordon périphérique d'étanchéité peut être prévu. Plusieurs passages à travers le cordon périphérique permettent les uns l'introduction sous pression du mélange réactionnel, les autres l'échappement de l'air et des gaz.

Des moyens supplémentaires peuvent être prévus pour compenser la pression interne et éviter l'écartement du moule et du contre-moule au cours de l'injection. A cet effet, on peut utiliser des tiges fixes ou des tiges de vérins menies à leur extrémité agissante, d'une ventouse, placés à des emplacements déterminés, prenant appui contre le moule et le contre-moule.

D'autres avantages et caractéristiques de l' invention apparaîtront dans la description suivante d'exemple de mise en oeuvre du procédé.

**Exemple 1**

On fabrique selon le procédé de l'invention un vitrage de sécurité formé d'une feuille de verre bombée de 3 mm d'épaisseur et d'une couche de matière plastique ayant des propriétés d'absorbeur d'énergie (couche AE) de 0,480 mm d'épaisseur.

Le mélange à injecter, apte à former la couche AE est formé à partir d'un composant polyol et d'un composant isocyanate. On prépare au préalable le composant polyol en mélangeant un polytétraméthylène glycol de masse mouléculaire 1000 avec du butanediol-1,4, et du polycaprolactonetriol de masse moléculaire 300, les proportions des trois constituants étant telles que le polytétraméthylèneglycol apporte 0,35 équivalent en groupes hydroxyles, le butanediol-1,4 en apporte 0,55 et le polycaprolactonetriol en apporte 0,1.

Au composant polyol on incorpore un stabilisant à raison de 0,5 % en poids de la masse totale du composant polyol et du composant isocyanate, un agent nappant à raison de 0,05 % en poids calculé de la même façon et un catalyseur de dilaurate de dibutylétain à raison de 0,02 % en poids calculé de la même façon que précédemment.

Le composant isocyanate utilisé est du 3-isocyanatométhyl-3,5,5, triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1.

On injecte ce mélange dans un moule disposé sensiblement horizontalement, formé d'une feuille de verre et

un contre-moule constitué également d'une feuille de verre présentant le même bombage, préalablement traitée à l'aide d'un agent de séparation, à savoir une solution de silicone. A la périphérie du moule, une cale en forme de tige cylindrique détermine l'écartement entre les deux feuilles de verre. Accolé à cette cale, un jonc en chlorure de polyvinyle assure l'étanchéité.

La pression d'injection est de 3 bars et la température du mélange réactionnel au cours de l'injection est de 45° C.

Des tiges munies de ventouses maintiennent les deux feuilles de verre à l'écartement désiré durant l'injection. L'injection est faite en un point situé au milieu d'un grand côté du vitrage, alors qu'il est prévu quatre orifices d'échappement disposés au quatre coins du vitrage. Après injection, le moule est chauffé à 120° C durant 20 mn environ.

Le vitrage obtenu après démoulage présente une excellente qualité optique et une transparence parfaite.

L'adhérence obtenue entre la feuille de verre et la couche de matière plastique est mesurée par un test de pelage décrit ci-dessous.

On découpe une bande de 5 cm de large sur la couche de recouvrement. On décolle l'extrémité de la bande sur laquelle on effectue une traction perpendiculaire à la surface du vitrage, avec une vitesse de 5 cm par minute. L'opération est réalisée à + 20° C. On note la force de traction moyenne nécessaire au décollement de la bande. En opérant ainsi, on obtient une force de traction de 11 daN/5 cm.

Des essais de résistance au choc à différentes températures sont réalisés sur des vitrages fabriqués selon l'exemple.

Un premier essai de résistance au choc est effectué à + 20° C avec une bille d'acier d'un poids de 2,260 kg (test de la grosse bille) que l'on fait tomber sur la partie centrale d'un échantillon de vitrage feuilleté de 30,5 cm de côté, maintenu sur un cadre rigide. On détermine la hauteur approximative, pour laquelle 90 % des échantillons testés à la température choisie résistent à la chute de bille sans être traversés.

Pour le vitrage feuilleté selon l'exemple la valeur obtenue est de 5 mètres.

Un autre essai de résistance au choc est effectué avec une bille d'acier de 0,227 kg (petite bille) et de 38 mn de diamètre. Un essai est réalisé à une température de - 20° C. Un autre essai est réalisé à une température de + 40° C. Les valeurs obtenues sont respectivement de 13,5 et de 9 mètres.

Ces valeurs sont satisfaisantes compte tenu de la norme européenne R43 en vigueur, les résultats recherchés étant d'au moins 4 mètres à la grosse bille, d'au moins 8,5 mètres à la petite bille à -20° C et d'au moins 9 mètres à la petite bille à + 40° C.

**Exemple 2**

On veut fabriquer un vitrage de sécurité formé d'une feuille de verre bombée de 3 mm d'épaisseur, d'une couche de matière plastique ayant des propriétés d'absorbeur d'énergie (couche AE) de 0,550 mm d'épaisseur et d'une couche de matière plastique ayant des propriétés de surface (couche PI) de 0,070 mm d'épaisseur.

Le mélange réactionnel utilisé pour former la couche AE est le même que celui utilisé dans l'exemple 1.

Le mélange réactionnel utilisé pour former la couche PI est formé à partir d'un composant polyol et d'un composant isocyanate en présence d'un stabilisant, d'un catalyseur et d'un agent nappant pris dans les proportions suivantes:

- 100 g d'un polyétherpolyol d'un poids moléculaire d'environ 450 obtenu par condensation d'oxyde de 1,2-propylène avec du 2,2-bis(hydroxyméthyl)-1-butanol et ayant une teneur en radicaux hydroryles libres d'environ 10,5 à 12 %,
- 5,2 g d'un stabilisant aux UV,
- 0,05 g de dilaurate de dibutylétain en tant que catalyseur et 0,2 g d'un ester fluoroalkylé en tant qu'agent nappant,
- 102 g d'un biuret de 1,6-hexaméthylènediisocyanate ayant une teneur en radicaux isocyanates libres d'environ 23,2 %.

Le composant polyol présente une viscosité d'environ 0,62 Pas (620 centipoises) à 25°C alors que le composant isocyanate présente une viscosité d'environ 2,3 Pas (2300 centipoises). Le stabilisant, le catalyseur et l'agent nappant sont ajoutés au préalable au composant polyol.

La feuille de verre servant de contre-moule est au préalable revêtue par pulvérisation du mélange réactionnel pour former la couche PI. A cet effet, la feuille de verre est disposée horizontalement sur un support adapté a sa forme et l'ensemble est placé sur un convoyeur. La feuille de verre est d'abord emmenée à un poste de traitement par pulvérisation d'un agent de séparation. Puis elle est acheminée dans un compartiment de formation de la couche PI. Là la feuille reçoit une pulvérisation du mélange réactionnel décrit ci-dessus. La pulvérisation est effectuée à l'aide d'un bol tournant à une vitesse d'environ 20 000 tours/min, le diamètre du bol étant d'environ 65 mm. On forme ainsi une couche PI de 0,070 mm environ qui est polymérisée dans un tunnel de polymérisation où le vitrage est soumis à une température de 100° C environ pendant 20 mn. La feuille de verre revêtue de la couche PI est ensuite utilisée en tant que contre-moule pour la formation par injection réactive de la couche AE comme décrit dans l'exemple 1.

Le vitrage obtenu après démoulage est formé des trois couches à savoir; la feuille de verre utilisée en tant que moule, la couche AE et la couche PI qui adhère fermement à la couche AE.

Le vitrage obtenu présente une bonne qualité optique et ses caractéristiques mécaniques sont les suivantes:

- le test du pelage fournit une valeur de 11 daN/5 cm,
- le test de la grosse bille et les deux essais à la petite bille donnent les valeurs respectives de 5, 13,5 et 10 mètres.

La résistance à la rayure de la couche PI est mesurée d'après le test connu sous l'appellation "Mar Resistance Test" pratiqué avec l'appareil ERICHSEN, type 413. On mesure la charge à porter sur une tête diamantée pour introduire une rayure persistante sur la couche de matière plastique de revêtement.

La résistance à la rayure est ici de 20 g. On mesure la résistance à l'abrasion de la couche PI, selon la norme européenne R43. A cet effet, on fait subir au vitrage recouvert par la couche de protection PI une abrasion à l'aide d'une meule abrasive. Après 100 tours d'abrasion, on mesure avec un spectrophotomètre l'écart de flou entre la partie abrasée et la partie non abrasée.

L'écart de flou doit être inférieur à 4 %. La valeur obtenue pour le vitrage selon l'exemple est de 3,5 %.

**Exemple 3**

On veut fabriquer un vitrage à trois couches comme dans l'exemple 2, sauf que la couche PI d'une épaisseur de 0,3 mm est formée par injection réactive de la même façon que la couche AE qui présente elle une épaisseur de 0,5 mm.

A cet effet, on forme la couche AE comme dans l'exemple 1. Puis après modefication de l'épaisseur des cales déterminant l'espace entre le moule et le contre-moule on forme la couche PI par injection réactive en opérant de façon similaire à la formation de la couche AE en utilisant les mêmes conditions de températures et de pression.

Le vitrage obtenu présente les caractéristiques désirées.

**Exemple 4**

On veut fabriquer un vitrage formé d'une feuille de verre de 3 mm d'épaisseur, d'une couche AE de 0,4 mm d'épaisseur, d'une feuille de matière plastique de renforcement notamment en téréphtalate de polyéthylène glycol de 0,1 mm d'épaisseur, et d'une couche PI de 0,07 mm d'épaisseur.

A cet effet on place sur la face du contre-moule, la feuille de téréphtalate de polyéthylèneglycol revêtue au préalable de la couche PI par mise en oeuvre par exemple d'une pulvérisation réactive comme décrite dans l'exemple 2 ou par coulée réactive comme décrit par exemple dans la publication de brevet européen 0 038 760, puis on injecte sous une pression de 3 bars le mélange réactionnel apte à former la couche AE comme décrit dans l'exemple 2.

**Exemple 5**

On veut fabriquer un vitrage feuilleté comprenant deux feuilles de verre et une couche AE en tant que couche intercalaire. On opère de la manière décrite dans l'exemple 1 sauf que la feuille de verre qui fait office de contre-moule ne subit pas de traitement au préalable à l'aide d'un agent de démoulage.

**Revendications**

1. Procédé de fabrication d'un vitrage feuilleté comprenant une feuille de verre, une couche transparente à base d'un polyuréthane ayant des propriétés d'absorbeur d'énergie, caractérisé en ce que la couche à base d'un polyuréthane ayant des propriétés d'absorbeur d'énergie est formée directement sur la feuille de verre par injection réactive, sous une pression comprise entre 2 et 10 bars, entre ladite feuille de verre et un contre-moule rigide, d'un mélange réactionnel d'un composant isocyanate d'une viscosité inférieure à 5 Pas à 40°C et d'un composant polyol, le composant isocyanate comprenant au moins un diisocyanate aliphatique ou cycloaliphatique ou un prépolymère de ces isocyanates, le composant isocyanate contenant des fonctions urées, le taux durée pouvant atteindre 10 % du poids total du composant isocyanate, de préférence ce taux d'urée étant compris entre 5 et 7 %, le composant polyol comprenant au moins un polyol long difonctionnel de masse moléculaire comprise entre 500 et 4000 et au moins un diol court en tant qu'agent d'allongement de chaîne, le rapport des groupements équivalents isocyanates aux groupements équivalents hydroxyles étant

environ égal à 1, les proportions entre les différents polyols étant choisies telles que le nombre de groupements hydroxyles équivalents dus au diol court représente de 20 à 70 % du total des groupements hydroxyles.

2. Procédé de fabrication d'un vitrage feuilleté comprenant une feuille de verre, une couche transparente à base d'un polyuréthane ayant des propriétés d'absorbeur d'énergie, caractérisé en ce que la couche à base d'un polyuréthane ayant des propriétés d'absorbeur d'énergie est formée directement sur la feuille de verre par injection réactive, sous une pression comprise entre 2 et 10 bars, entre ladite feuille de verre et un contre-moule rigide, d'un mélange réactionnel d'un composant isocyanate d'une viscosité inférieure à 5 Pas à 40°C et d'un composant polyol, le composant isocyanate comprenant au moins un diisocyanate aliphatique ou cycloaliphatique ou un prépolymère de ces isocyanates, le composant polyol comprenant au moins un polyol long difonctionnel de masse moléculaire comprise entre 500 et 4000, au moins un diol court en tant qu'agent d'allongement de chaîne, au moins un polyol de fonctionnalité supérieure à 2, le rapport des groupements équivalents isocyanates aux groupements équivalents hydroxyles étant environ égal à 1, les proportions entre les différents polyols sont choisies telles que le nombre de groupements hydroxyles équivalents dus au diol court représente de 20 à 70 % du total des groupements hydroxyles.

3. Procédé selon une des revendications 1 ou 2, caractérisé en ce que le composant isocyanate comprend du 3-isocyanatométhyl-3,5,5-5 triméthylcyclohexylisocyanate.

4. Procédé selon une des revendications 1 à 3, caractérisé en ce que le composant isocyanate est formé essentiellement de 3-isocyanatométhyl-3,5,5-triméthylcyclohexylisocyanate présentant des groupements urées et en ce que le polyol long est formé essentiellement de polytétraméthylèneglycol de masse moléculaire d'environ 1000 et le diol court de butanediol- 1,4.

5. Procédé selon l'une des revendications 1 à 4, caractérisé en ce que pour un équivalent d'hydroxyle au total pour le composant polyol du polyuréthane ayant des propriétés d'absorbeur d'énergie, le polyol long représente 0,30 à 0,45 équivalent, le diol court 0,2 à 0,7 équivalent et le polyol de fonctionnalité supérieure à 2 de 0 à 0,35 équivalent.

6. Procédé selon une des revendications 1 à 5, caractérisé en ce que la couche de polyuréthane ayant des propriétés d'absorbeur d'énergie comprend des additifs tel un catalyseur, un agent nappant, un stabilisant.

7. Procédé selon une des revendications 1 à 6, caractérisé en ce que le mélange réactionnel est injecté dans le moule avec une pression de 2 à 3 bars et à une température comprise entre 80 et 150°C.

8. Procédé selon une des revendications 1 à 7, caractérisé en ce que la couche ayant des propriétés d'absorbeur d'énergie est associée au cours du moulage à au moins une autre couche en verre ou en matière plastique.

9. Procédé selon la revendication 8, caractérisé en ce que l'autre couche est une couche de matière plastique ayant des propriétés de surface.

10. Procédé selon la revendication 9, caractérisé en ce que la couche ayant des propriétés de surface est formée au préalable et qu'elle est placée sur le contre-moule.

11. Procédé selon la revendication 10, caractérisé en ce que la couche ayant des propriétés de surface est formé au préalable par pulvérisation réactive.

12. Procédé selon une des revendications 10 ou 11, caractérisé en ce que la couche ayant des propriétés de surface est formée par pulvérisation réactive sur le contre-moule muni au préalable d'un agent de séparation.

13. Procédé selon une des revendications 8 à 12, caractérisé en ce que la couche injectée est associée au cours du moulage à une structure feuilletée, notamment une feuille de renforcement en matière plastique revêtue au préalable d'une couche ayant des propriétés de surface.

14. Vitrage obtenu par la mise en oeuvre du procédé selon une des revendications 1 à 13.

**Patentansprüche**

1. Verfahren zur Herstellung eines eine Glasscheibe und eine transparente Schicht auf Polyurethanbasis mit energieabsorbierenden Eigenschaften umfassenden Verbundglases, dadurch gekennzeichnet daß die Schicht auf Polyurethanbasis mit energieabsorbierenden Eigenschaften direkt auf der Glasscheibe durch reaktive Injektion eines Reaktionsgemisches aus einer Isocyanatkomponente mit einer Viskosität von weniger als 5 Pas bei 40°C und aus einer Polyolkomponente mit einem Druck zwischen 2 und 10 bar zwischen die Glasscheibe und eine starre Gegenform gebildet wird, wobei die Isocyanatkomponente wenigstens ein aliphatisches oder cycloaliphatisches Diisocyanat oder ein Vorpolymerisat aus diesen Isocyanaten umfaßt und die Isocyanatkomponente Harnstoffgruppen enthält, wobei der Harnstoffanteil bis zu 10 %, vorzugsweise zwischen 5 und 7 %, vom Gesamtgewicht der Isocyanatkomponente betragen kann, die Polyolkomponente wenigstens ein bifunktionelles langes Polyol mit einem Molekulargewicht zwischen 500 und 4000 und wenigstens ein kurzes Diol als Kettenverlängerungsmittel enthält, und das Verhältnis der Isocyanatgruppen-Äquivalente zu den Hydroxylgruppen-Äquivalenten bei etwa 1 liegt, wobei die Mengenverhältnisse zwischen den verschiedenen Polyolen so gewählt sind, daß die Anzahl der durch das kurze Diol bedingten Hydroxylgruppen-Äquivalent etwa 20 bis 70 % von der Gesamtheit der Hydroxylgruppen beträgt.

2. Verfahren zur Herstellung eines eine Glasscheibe und eine transparente Schicht auf Polyurethanbasis mit energieabsorbierenden Eigenschaften umfassenden Verbundglases, dadurch gekennzeichnet, daß die Schicht

auf Polyurethanbasis mit energieabsorbierenden Eigenschaften direkt auf der Glasscheibe durch reaktive Injektion eines Reaktionsgemisches aus einer Isocyanatkomponente mit einer Viskosität von weniger als 5 Pas bei 40°C und aus einer Polyolkomponente mit einem Druck zwischen 2 und 10 bar zwischen die Glasscheibe und eine starre Gegenform gebildet wird, wobei die Isocyanatkomponente wenigstens ein aliphatisches oder cycloaliphatisches Diisocyanat oder ein Vorpolymerisat aus diesen Isocyanaten umfaßt, die Polyolkomponente wenigstens ein bifunktionelles langes Polyol mit einem Molekulargewicht zwischen 500 und 4000, wenigstens ein kurzes Diol als Kettenverlängerungsmittel und wenigstens ein Polyol mit einer Funktionalität von mehr als 2 enthält, wobei das Verhältnis der Isocyanatgruppen-Äquivalente zu den Hydroxylgruppen-Äquivalenten bei etwa 1 liegt und die Mengenverhältnisse zwischen den verschiedenen Polyolen so gewählt sind, daß die Anzahl der durch das kurze Diol bedingten Hydroxylgruppen-Äquivalente etwa 20 bis 70 % von der Gesamtheit der Hydroxylgruppen beträgt.

3. Verfahren nach Anspruch 1 oder 2, dadurch gekennzeichnet, daß die Isocyanatkomponente 3-Isocyanatmethyl-3,5,5-trimethylcyclohexylisocyanat enthält.

4. Verfahren nach einem der Ansprüche 1 bis 3, dadurch gekennzeichnet, daß die Isocyanatkomponente im wesentlichen aus Harnstoffgruppen aufweisendem 3-Isocyanatmethyl-3,5,5-trimethylcyclohexylisocyanat gebildet wird und daß das lange Polyol im wesentlichen aus Polytetramethylenglycol mit einem Molekulargewicht von etwa 1000 und das kurze Diol aus Butan-diol-1,4 gebildet wird.

5. Verfahren nach einem der Ansprüche 1 bis 4, dadurch gekennzeichnet, daß für ein Äquivalent eines Hydroxyls insgesamt für die Polyolkomponente des Polyurethans mit energieabsorbierenden Eigenschaften das lange Polyol 0,30 bis 0,45 Äquivalent, das kurze Diol 0,2 bis 0,7 Äquivalent und das Polyol mit der Funktionalität von mehr als 2 zwischen 0 und 0,35 Äquivalent darstellt.

6. Verfahren nach einem der Ansprüche 1 bis 5, dadurch gekennzeichnet, daß die Polyurethanschicht mit den energieabsorbierenden Eigenschaften Zusatzstoffe wie etwa einen Katalysator, ein Netzmittel oder einen Stabilisator enthält.

7. Verfahren nach einem der Ansprüche 1 bis 6, dadurch gekennzeichnet, daß das Reaktionsgemisch mit einem Druck von 2 bis 3 bar und bei einer Temperatur zwischen 80 und 150°C in die Form injiziert wird.

8. Verfahren nach einem der Ansprüche 1 bis 7, dadurch gekennzeichnet, daß die Schicht mit den energieabsorbierenden Eigenschaften im Verlaufe der Formung mit wenigstens einer weiteren Schicht aus Glas oder Kunststoff verbunden wird.

9. Verfahren nach Anspruch 8, dadurch gekennzeichnet, daß die weitere Schicht eine Schicht aus Kunststoff mit Oberflächeneigenschaften ist.

10. Verfahren nach Anspruch 9, dadurch gekennzeichnet, daß die Schicht mit Oberflächeneigenschaften im voraus gebildet und daß sie auf die Gegenform aufgebracht wird.

11. Verfahren nach Anspruch 10, dadurch gekennzeichnet, daß die Schicht mit Oberflächeneigenschaften im voraus durch reaktives Aufstäuben gebildet wird.

12. Verfahren nach Anspruch 10 oder 11, dadurch gekennzeichnet, daß die Schicht mit Oberflächeneigenschaften durch reaktives Aufstäuben auf die mit einem Trennmittel vorbehandelte Gegenform aufgebracht wird.

13. Verfahren nach einem der Ansprüche 8 bis 12, dadurch gekennzeichnet, daß die injizierte Schicht im Verlaufe der Formung mit einer Schichtstruktur verbunden wird, insbesondere mit einer Verstärkungsfolie aus Kunststoff, die vorher mit einer Schicht mit Oberflächeneigenschaften bedeckt wurde.

14. Verbundglas, hergestellt mit Hilfe des Verfahrens nach einem der Ansprüche 1 bis 13.

## Claims

1. A method of making a laminated pane comprising a sheet of glass and a transparent layer based upon a polyurethane having energy absorber properties, characterized in that the layer based upon a polyurethane having energy absorber properties is formed directly on the sheet of glass by reactive injection, under a pressure of from 2 to 10 bars, between said glass sheet and a rigid counter-mould, of a reaction mixture of an isocyanate component with a viscosity less than 5 Pas at 40°C and of a polyol component, the isocyanate component comprising at least one aliphatic or cycloaliphatic diisocyanate or a prepolymer of these isocyanates, the isocyanate component containing urea functions, the urea content being up to 10 % of the total weight of the isocyanate component, this urea content preferably being from 5 to 7 %, the polyol component comprising at least one difunctional long polyol having a molecular weight of 500 to 4,000 and at least one short diol as chain lengthening agent, the ratio of the isocyanate equivalent groups to the hydroxyl equivalent groups being approximately equal to 1, the proportions between the different polyols being selected such that the number of equivalent hydroxyl groups due to the short diol amounts to 20 to 70 % of the total of the hydroxyl groups.

2. A method of making a laminated pane comprising a sheet of glass and a transparent layer based upon a polyurethane having energy absorber properties, characterized in that the layer based upon a polyurethane having energy absorber properties is formed directly on the glass sheet by reactive injection, under a pressure of from 2 to 10 bars, between said glass sheet and a rigid counter-mould, of a reaction mixture of an isocyanate component having a viscosity less than 5 Pas at 40°C and of a polyol component, the isocyanate component

comprising at least one aliphatic or cycloaliphatic diisocyanate or a prepolymer of these isocyanates, the polyol component comprising at least one difunctional long polyol having a molecular weight of 500 to 4,000, at least one short diol as chain lengthening agent, and at least one polyol having a functionality greater than 2, the ratio of the isocyanate equivalent groups to the hydroxyl equivalent groups being approximately equal to 1, the proportions between the different polyols being selected such that the number of equivalent hydroxyl groups due to the short diol represents from 20 to 70 % of the total of the hydroxyl groups.

3. A method according to one of claims 1 or 2, characterized in that the isocyanate component comprises 3-isocyanatomethyl-3,5,5-trimethyl cyclohexyl isocyanate.

4. A method according to one of claims 1 to 3, characterized in that the isocyanate component is formed essentially of 3-isocyanatomethyl-3,5,5-trimethyl cyclohexyl isocyanate possessing urea groups and in that the long polyol is formed essentially of polytetramethylene glycol having a molecular weight of approximately 1,000 and the short diol of butane diol-1,4.

5. A method according to one of claims 1 to 4, characterized in that, for a hydroxyl equivalent in total for the polyol component of the polyurethane having energy absorber properties, the long polyol represents 0.30 to 0.45 equivalent, the short diol 0.2 to 0.7 equivalent and the polyol having a functionality exceeding 2 represents 0 to 0.35 equivalent.

6. A method according to one of claims 1 to 5, characterized in that the polyurethane layer having energy absorber properties comprises additives such as a catalyst, a pouring agent, a stabilizer.

7. A method according to one of claims 1 to 6, characterized in that the reaction mixture is injected into the mould at a pressure of 2 to 3 bars and at a temperature of 80 to 150° C.

8. A method according to one of claims 1 to 7, characterized in that the layer having energy absorber properties is associated during the moulding with at least one other layer of glass or of plastics material.

9. A method according to claim 8, characterized in that the other layer is a layer of plastics material having surface properties.

10. A method according to claim 9, characterized in that the layer having surface properties is formed previously and that it is placed on the counter-mould.

11. A method according to claim 10, characterized in that the layer having surface properties is formed previously by reactive atomization.

12. A method according to one of claims 10 or 11, characterized in that the layer having surface properties is formed by reactive atomization onto the counter-mould previously provided with a parting agent.

13. A method according to one of claims 8 to 12, characterized in that the injected layer is associated during the moulding with a laminated structure, notably a reinforcing sheet of plastics material previously coated with a layer having surface properties.

14. Pane produced by the carrying out of the method according to one of claims 1 to 13.